# EUROPEAN PATENT APPLICATION

(11) **EP 2 110 314 A2**
(43) Date of publication of application: **21.10.2009**
(21) Application number: 09250284.8
(22) Date of filing: 04.02.2009
(51) Int. Cl.: B64D 15/12, F02C 7/047, F01D 25/02

(54) **De-icing system for engine inlet and method of preventing ice formation**

(30) Priority: 16.04.2008 US 82990
(71) Applicant: United Technologies Corporation, Hartford, CT 06101 (US)
(72) Inventor: Hogate, Isaac Jon, Cromwell, CT 06416 (US); Carroll, Christian A., Haddam, CT 06438 (US)
(74) Representative: Tomlinson, Kerry John

(57) **Abstract**

An engine inlet ice protection system and method for ice protection includes a plurality of grouped structural elements (20) having electrical components that provide ice protection where power is cycled to the groups (I-V) of structural elements so that at a given time the ice protection elements receiving power are generally evenly distributed throughout the engine inlet (10).

## Description

### BACKGROUND

Operation of aircraft engines in adverse weather conditions or at high altitudes can sometimes lead to ice forming on the exposed surfaces of engine inlets. The build-up of ice on engine inlet surfaces limits the quantity of air being fed to the engine. This reduction in inlet airflow can result in a reduction of power output, efficiency and/or cooling capacity of the engine. Airflow inconsistencies and disturbed airflow can cause performance issues and vibration problems in downstream parts of the engine and can also lead to loss of thrust.

Systems used to prevent or remove ice formation on aircraft are well known. Engine inlet anti-icing systems commonly employ a thermal source, such as hot air bled from the engine core, which is applied to the engine inlet to melt or evaporate ice build-up on the external surfaces thereof. Electrothermal devices have also been used to prevent ice formation and remove ice from aircraft. Commonly employed electrothermal deicers use heating elements that are mounted on a flexible backing. These heating elements can then be attached to aircraft structures with an adhesive. Coatings containing heating elements have also been used.

### SUMMARY

An exemplary embodiment of the invention is an engine inlet ice protection system having a plurality of fairings distributed generally evenly within an engine inlet. The fairings are grouped and distributed within the engine inlet so that fairings in one group are separated from each other by at least one fairing from a different group. The fairings have embedded electrical components that provide ice protection.

Another exemplary embodiment of the invention is an engine inlet ice protection system having a plurality of grouped fairings with embedded electrical components to provide ice protection and a power distribution system. The power distribution system cycles electric current so that the fairing electrical components powered at a given time are generally evenly distributed within the engine inlet.

An additional exemplary embodiment of the invention is an engine inlet ice protection system having first and second heating zones and a power distribution system. The first and second heating zones each have a plurality of fairings with embedded electrical components to provide ice protection. The power distribution system cycles current to the heating zones one zone at a time.

A further exemplary embodiment of the invention includes a method of preventing and reducing ice formation and conditioning airflow in an engine inlet by activating a power distribution system to deliver electric current to fairings having embedded heating elements. Power is cycled to the fairings so that at a given time the fairings being powered are generally evenly distributed within the engine inlet.

Another exemplary embodiment of the invention is an engine inlet ice protection system having seventeen grouped fairings with embedded electrical components and a power distribution system for cycling power to the grouped fairings one group at a time. The first, fifth, ninth, and fourteenth fairings form a first group. The second, fourth, eighth, eleventh, and fifteenth fairings form a second group. The third, seventh, twelfth, and sixteenth fairings form a third group. The sixth, tenth, thirteenth, and seventeenth fairings form a fourth group.

### BRIEF DESCRIPTION OF THE DRAWINGS

FIG. 1 is a perspective view of an engine inlet.

FIG. 2 is a front view of an engine inlet with grouped fairings according to an exemplary embodiment of the invention.

FIG. 3 is a front view of an engine inlet with grouped fairings according to an alternative embodiment of the invention.

### DETAILED DESCRIPTION

Exemplary embodiments of the invention include engine inlets having composite fairings and nosecones with embedded heating elements. During operation, the heating elements, distributed generally evenly throughout the engine inlet, prevent or reduce ice formation by heating the structures (fairing or nosecone) in which they are located. Ice formation is prevented or reduced by the heating and any ice already formed on the structures is shed off by the combination of the heating (to melt the ice) and the airflow passing around the structure. The heating elements active at any one time are distributed throughout the engine inlet to prevent and reduce airflow disturbances.

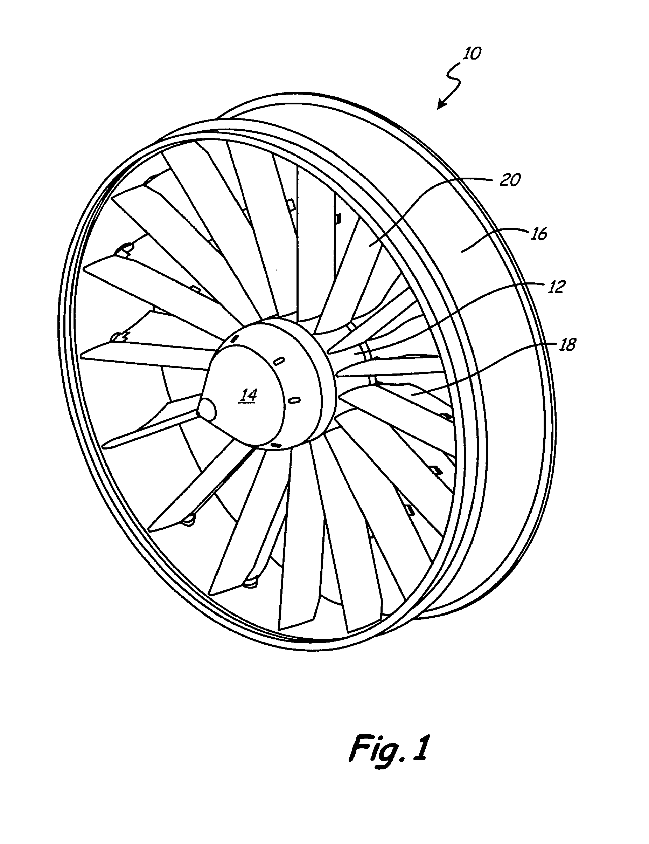

FIG. 1 illustrates one example of an engine inlet 10. Engine inlet 10 includes inner ring 12, nosecone 14, outer ring 16, a plurality of inner struts (not shown) extending from inner ring 12 to outer ring 16 and a plurality of fairings 20 surrounding the inner struts. Nosecone 14 is located at an upstream side of the engine inlet. The fairings 20 are located downstream from nosecone 14, and they surround and are bonded to the inner struts. Like the inner struts, the fairings 20 extend radially from inner ring 12 to outer ring 16. Variable vanes 18 are located downstream of the fairings 20 and inner struts. While FIG. 1 depicts seventeen fairings 20 (and therefore seventeen inner struts) within engine inlet 10, the number of inner struts and fairings present in the engine inlet is not limited by this illustration. Configurations with fewer or greater numbers of fairings and inner struts within the engine inlet are possible. The number of fairings and inner struts in a given engine inlet will depend on the size of the engine inlet and other factors.

The fairings 20 contain heating elements (not shown) and other components that require electrical power. The heating elements may be of conventional type, for instance each can be formed as from a spray metal resistive layer disposed on fiberglass webs. The nosecone 14 may also contain heating elements and other components requiring electrical power. When active, the heating elements within the fairings 20 and nosecone 14 provide heat to reduce or prevent ice formation, thereby providing an optimal or designed flow of air into the engine inlet and to engine components farther downstream. The heating elements and other electrical components require an electric current (power) to operate. Electric current may be provided to the fairings and nosecone by a power source external to these structures (fairings and nosecone).

Providing all the fairings 20 and nosecones 14 of multiple engine inlets 10 with electric current at one time may be burdensome on the aircraft power plant. By distributing the electric current to groups of structures on a cycled basis, the aircraft's power can be conserved and used more efficiently. Power distribution systems and the accompanying mechanisms for delivering electric current to different groups of structures within an engine inlet are generally known in the art. One example of a power distribution system suitable for use in an exemplary embodiment of the invention includes a combination of switches and pulse width modulation. An exemplary embodiment of the invention provides for a novel arrangement of fairing groups and, optionally, nosecone groups to which power is cycled within the engine inlet.

Some engine inlets having fairings and nosecones with embedded heating elements may have power cycled to groups of the fairings and nosecones within the engine inlet one group at a time in a non-optimal fashion. These engine inlets (not claimed) generally have power distributed to heating elements in one part of the engine inlet at a time. For example, the engine inlet may be grouped roughly into quarters, and fairings in one quarter of the engine inlet receive power at any one time (i.e. the first quarter receives power, then the second quarter, then the third quarter, and so on). This leaves large and unbroken expanses within the engine inlet without ice protection at any given time (the roughly three-quarters that do not receive power). A large drawback associated with this power cycling scheme is that the airflow passing over non-active ice protection elements may become disturbed due to ice formation and may not be conditioned for optimal engine performance. This provides opportunities for potential airflow disturbances in a large area within the engine inlet at any given time. Disturbed airflow passing through a large area within the engine inlet may cause significant problems downstream in the engine.

If power is distributed to a nosecone, the fairing ice protection system elements may not receive power. In this distribution scheme, serious airflow problems can occur because one quarter of the engine inlet may develop ice and have disturbed airflow while that group's fairing elements may not become active again for three or four cycles (i.e. the other fairing groups receive power before the affected group). Thus, airflow passing through the affected group of the engine inlet may be disturbed for multiple cycles. This problem is compounded when airflow of multiple and/or adjacent groups are forced to wait their turn for power to activate their ice protection heating elements to remove ice and improve nearby airflow.

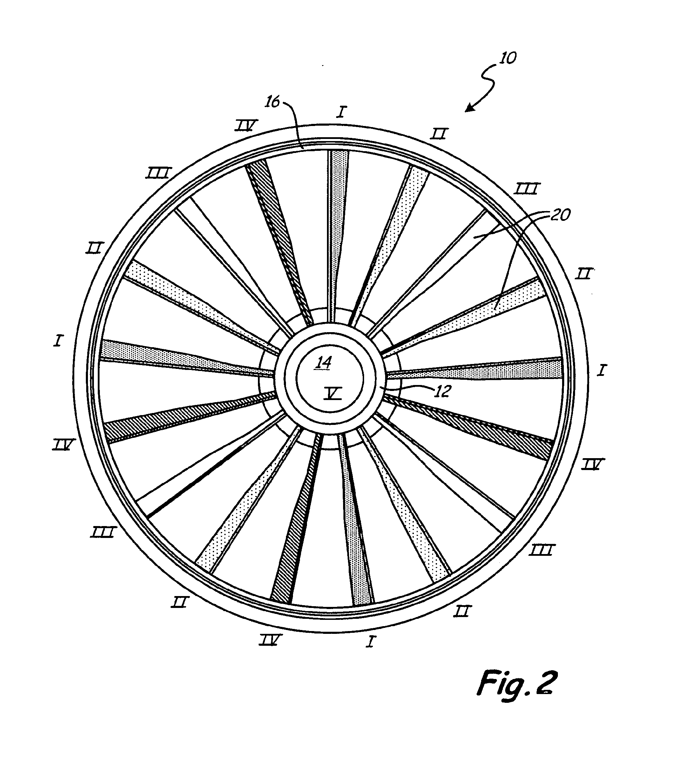

Exemplary embodiments of the invention provide for power distribution that eliminates or reduces the potential for airflow disturbances. One embodiment of the invention is illustrated in FIG. 2. FIG. 2 illustrates an engine inlet 10 with a plurality of generally evenly spaced fairings 20 extending from inner ring 12 to outer ring 16. Nosecone 14 is also present. Engine inlet 10 contains seventeen individual fairings 20. These seventeen fairings 20 are split into four groups, indicated by the various shading and hatching of FIG. 2. The fairing groups are indicated in FIG. 2 by roman numerals. Fairings belonging to the same group are spaced throughout the engine inlet rather than concentrated consecutively and in roughly one-quarter of the engine inlet. For example, if the fairings 20 are numbered consecutively in a clockwise direction starting with the fairing pointing directly upward from nosecone 14, the first, fifth, ninth, and fourteenth fairings belong to Group I. The second, fourth, eighth, eleventh, and fifteenth fairings belong to Group II. The third, seventh, twelfth, and sixteenth fairings belong to Group III. And finally, the sixth, tenth, thirteenth, and seventeenth fairings belong to Group IV. Nosecone 14 also contains heating elements and is a member of a separate group, Group V. It is possible for other arrangements of the fairing groups as long as the fairings are generally evenly distributed within the engine inlet as they are in the embodiment described above and illustrated in FIG. 2.

Power is distributed to the fairings one group at a time. According to this grouping and power distribution scheme, when electric current is directed to Group I, no electric current is directed to Groups II-V. When electric current is directed to Group II, no electric current is directed to Groups I, III, IV, and V. When electric current is directed to Group III, no electric current is directed to Groups I, II, IV, and V, and so forth. Electric current is cycled through the different groups during operation. For example, electric current may be delivered to Group I, then to Group II, then to Group III, then to Group IV, and then to Group I again. So, at any given time when power is distributed to one of the fairing groups (I-IV), roughly one quarter of the fairing ice protection system elements receive power while the remaining roughly three-quarters of the fairing ice protection system elements do not. However, the fairings belonging to each group are distributed generally evenly throughout the engine inlet rather than being located in a concentrated area of the engine inlet. Thus, when power is cycled to the different fairing groups, fairings distributed generally evenly throughout the engine inlet are heated by the fairing heating elements. Regardless of which fairing group is active, ice protection heating elements distributed generally evenly throughout the engine inlet are powered so that ice accumulation does not occur in a large and concentrated area of the engine inlet and large, unbroken expanses of disturbed air do not travel downstream from the engine inlet. By preventing the large, unbroken expanses of disturbed air, airflow disturbances are minimized and the deleterious effects such airflow has on the engine are eliminated or reduced.

In the distribution scheme illustrated in FIG. 2, the airflow problems caused by the activation and powering of the nosecone group (V) is minimized. When the nosecone group receives power, the fairing ice protection heating elements do not receive power and ice may begin to form on the fairings. When power is cycled back to the fairing groups, however, ice protection heating elements generally evenly distributed throughout the engine inlet are activated and heated to shed the ice formed on the activated fairing group. Because the grouped fairings are generally evenly distributed throughout the engine inlet, major airflow disturbances are reduced since large, unbroken expanses of disturbed air are prevented. While an individual fairing affected by ice formation may still not receive power for multiple cycles, nearby fairings are activated to ensure that airflow in the affected zone is still adequate and that large and unbroken portions of the engine inlet do not have ice accumulation. By spacing out the activated fairings at any one time, large pockets of disturbed airflow are avoided and the downstream engine components are allowed to operate at optimal or designed levels.

In certain embodiments of the invention, the engine inlet contains seventeen fairings as illustrated in FIGS. 1 and 2. Other quantities of fairings are possible. The number of fairings present in an engine inlet will largely depend on spatial constraints, the type of engine, and other factors. Providing ten or more fairings within an engine inlet is common, but some engine inlets, such as those on helicopters, may have as few as three fairings. In the embodiment illustrated in FIG. 2 and described above, the seventeen fairings in the engine inlet are divided among four fairing groups. In this embodiment, each fairing group contains between about one-fourth and one-third the total number of fairings in the engine inlet. Greater and lesser numbers of groups may be appropriate depending on the number of fairings present in the engine inlet, the type of engine, and the anticipated flight speeds and conditions the engine is designed to operate in. A fairing group may contain anywhere from about one-sixth of the total number of fairings in the engine inlet to about half of the total number of fairings in the engine inlet. At least two fairing groups are necessary in order to be able to cycle power between fairing groups. The maximum number of fairing groups, and the optional nosecone group, depends on the length of time power is distributed to a structural group. Long periods of power distribution to one structural group will require a smaller number of structural groups to ensure adequate ice protection while short periods of power distribution to one structural group may allow for several structural groups.

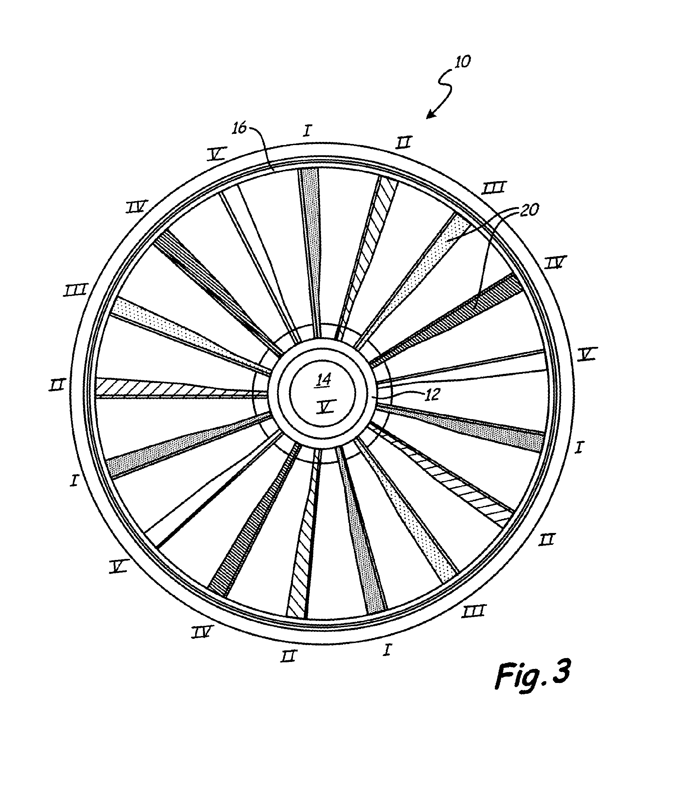

In some embodiments, the nosecone can be included in a group of fairings rather than included as its own group. In an alternative embodiment of an engine inlet with seventeen fairings, Groups I and II might include four fairings each, Groups III and IV might include three fairings each, and Group V might include three fairings and the nosecone. FIG. 3 illustrates one such embodiment. The structural groups are indicated in FIG. 3 by roman numerals. The structural groups are generally distributed in the engine inlet as discussed above. If the fairings 20 are numbered consecutively in a clockwise direction starting with the fairing pointing directly upward from nosecone 14, the first, sixth, ninth, and thirteenth fairings belong to Group I. The second, seventh, tenth, and fourteenth fairings belong to Group II. The third, eighth, and fifteenth fairings belong to Group III. The fourth, eleventh, and sixteenth fairings belong to Group IV. And, finally, the fifth, twelfth, and seventeenth fairings and nosecone 14 belong to Group V. Electric current availability and the demands of other aircraft components are factors in determining how a nosecone group may be incorporated. Thus, in some embodiments, nosecone 14 is not a separate group, but included as a member of a fairing group.

In the embodiments illustrated in FIGS. 2 and 3, each structural group (fairing and/or nosecone) is powered for about thirty seconds at a time. After a first structural group is powered for about thirty seconds, power is rerouted from the first structural group to a second structural group. After about an additional thirty seconds, power is rerouted from the second structural group to a third structural group, and so on until the cycle is complete and then power is rerouted from the final structural group to the first structural group to begin a new cycle. In this particular embodiment, a structural group receives power for thirty seconds and then receives no power for 120 seconds while the other four structural groups receive their power in turn.

Power can be distributed for shorter or longer amounts of time than thirty seconds. Power distribution times as short as fifteen seconds or as long as forty-five seconds or even sixty seconds may be adequate depending on the type of engine as well as flight speed and flight conditions. Additionally, higher heat loads produced by the fairing and nosecone heating elements may allow for shortened distribution times for each structural group. Cooling times for the structural elements (i.e. the time an element does not receive power) can also be lengthened by adding null groups where no structural elements receive power for a period of time during the distribution cycle. This may be done to conserve energy and further remove burdens on the aircraft power plant.

In some embodiments, sensors may be present within the engine inlet. Appropriate sensors include those used for determining temperature. Temperature sensors, such as devices that determine temperature based on measured resistance, may be present in the fairings, nosecone, or other engine inlet structures. The sensors may activate initiation of the power distribution cycle for the heating elements in the engine inlet. For example, when a temperature sensor reaches a certain threshold temperature, electric current distribution is initiated and electric current is delivered to the first ice protection group and the heating elements are activated.

Although the present invention has been described with reference to exemplary embodiments, workers skilled in the art will recognize that changes may be made in form and detail without departing from the scope of the invention, which is defined by the claims and their equivalents.

## Claims

1. An engine inlet ice protection system comprising:
a plurality of groups (I-V) of fairings (20), wherein each fairing contains an embedded electrical component to provide ice protection; and
a power distribution system for cycling electric current to the embedded electrical components of the respective groups of fairings, wherein electric current is cycled so that the embedded electrical components powered at a given time are generally evenly distributed within the engine inlet (10).

2. The engine inlet ice protection system of claim 1 wherein fairings in a group are separated from each other by a fairing of a different group.

3. The engine inlet ice protection system of claim 1 or 2 further comprising a nosecone (14), wherein the nosecone contains an embedded electrical component to provide ice protection, and wherein the power distribution system cycles electric current to the embedded electrical component in the nosecone in addition to the embedded electrical components of the grouped fairings.

4. The engine inlet ice protection system of claim 1, 2 or 3, wherein the power distribution system cycles electric current to a fairing group or if provided a nosecone (14) for between about 15 seconds and about 45 seconds.

5. The engine inlet ice protection system of claim 1, 2, 3 or 4, wherein the engine inlet comprises at least three fairings (20).

6. The engine inlet ice protection system of claim 1, 2, 3 or 4, wherein the engine inlet comprises at least ten fairings (20).

7. The engine inlet ice protection system of any preceding claim, wherein the power distribution system is activated by a sensor.

8. The engine inlet ice protection system of any preceding claim, comprising:
seventeen grouped fairings having embedded electrical components; and wherein the power distribution system cycles electric current to the grouped fairings having embedded electrical components one group at a time, wherein first, fifth, ninth, and fourteenth fairings form a first group (I); second, fourth, eighth, eleventh, and fifteenth fairings form a second group (II); third, seventh, twelfth, and sixteenth fairings form a third group (III); and sixth, tenth, thirteenth, and seventeenth fairings form a fourth group (IV).

9. The engine inlet ice protection system of claim 8 further comprising a nosecone (14) having embedded electrical components, wherein the nosecone forms a fifth group (V).

10. A method of preventing and reducing ice formation and conditioning airflow in an engine inlet having a plurality of generally evenly spaced fairings with embedded heating elements, the method comprising:
activating a power distribution system to deliver electric current to the embedded heating elements of the plurality of fairings; and
cycling electric current to a fraction of the total embedded heating elements at a given time, wherein the embedded heating elements receiving electric current at the given time are generally evenly distributed within the engine inlet.

11. The method of claim 10, wherein electric current is cycled to between about one-sixth and about one-third of the embedded heating elements at a given time.

12. The method of claim 10 or 11 further comprising cycling electric current to a nosecone having an embedded heating element.
